# EUROPEAN PATENT SPECIFICATION

(11) **EP 1 897 801 B1**
(45) Date of publication and mention of the grant of the patent: **06.12.2017**
(21) Application number: 07017776.1
(22) Date of filing: 11.09.2007
(51) Int. Cl.: B63H 21/20, B63H 21/21, B63H 20/20, B63H 20/00

(54) **Hybrid-type watercraft propulsion system and its operating method**
Hybridystem zum Antrieb von Wasserfahrzeugen und Betriebsverfahren dafür
Système de propulsion de bateaux de type hybride et son procédé de fonctionnement

(30) Priority: 12.09.2006 JP 2006246585; 11.09.2006 JP 2006246081
(43) Date of publication of application: 12.03.2008
(73) Proprietor: Yamaha Hatsudoki Kabushiki Kaisha, Shizuoka-ken Shizuoka 438-8501 (JP)
(72) Inventor: Mizokawa, Takashi, Hammatsu-shi Shizuoka-ken 432-8528 (JP)
(74) Representative: Grünecker Patent- und Rechtsanwälte PartG mbB

(56) References cited:
- JP-A- S59 230 894
- JP-A- 2003 080 955
- JP-A- 2006 036 086
- US-A- 3 703 642
- US-B1- 6 396 161
- US-B1- 6 857 918

## Description

The present invention relates to a watercraft propulsion system and its operating method. More specifically, it relates to a hybrid-type watercraft propulsion system having an engine and an electric motor as a source of driving force for a propeller and its operating method.

The similar types of prior art are disclosed in Patent Document 1 and 2.

The Patent Document 1 discloses a technique of assisting the driving power of an engine by the driving power of an electric motor for driving a power transmission device.

Also in the Patent Document 2, a throttle grip that can be operated in a freely rotatable manner is provided on a bar handle, and a control switch is provided in the vicinity of the throttle grip. By operating the control switch, running and stopping of the engine and the electric motor, as well as the rotational direction of the electric motor can be controlled, and the rotational speeds of the electric motor and engine can be adjusted according to the turning operation of the throttle grip.
Patent Document 1: JP-A-2004-257294
Patent Document 2: JP-A-2006-36086

The technique in Patent Document 1, however, is to ensure consistency of the engine operation with the electric motor operation on the assumption that the engine is always running while under way. Therefore, such technique cannot prevent the exhaust gas and the noise emission during the reverse operation.

In the Patent Document 2, two control means composed of control switch and the throttle grip must be used for controlling the running, stopping, and rotational speeds of the engine as well as the electric motor, and the operation of such control means was troublesome.

Prior art document US 6,857,918 B1 relates to a personal watercraft having a hybrid power source with a power plant, a controller, a jet propulsion system and a battery source. The power plant includes an electrical turning machine ETM that is operatively connected to an internal combustion engine. Said watercraft is provided with a throttle lever and there are various buttons provided which contain a shore button and a reverse handle for selecting a respective operation mode.

Therefore, the main objective of the present invention is to provide a watercraft propulsion system and its operating method by which an engine and an electric motor can be controlled easily, and at the same time the exhaust gas and the noise during the reverse operation can be suppressed.

This objective is solved in an inventive manner by a watercraft propulsion system including an engine and an electric motor as a source of driving force for a propeller, and comprising an instruction means configured for receiving instructions regarding the types of operating mode as well as the amount of output power from the source of driving force, and a setting means configured for setting a propeller driving mode according to the instruction given by the instruction means, wherein the setting means is adapted to set the propeller driving mode to a first driving mode when a reverse mode is instructed by the instructions means and the setting means is adapted to set the propeller driving mode to the first driving mode when the trolling mode is instructed by the instruction means, in the first driving mode the propeller is driven by the electric motor, and wherein the amount of output power from the electric motor is adjusted according to the instruction given by the instruction means.

Preferably, in the first driving mode the propeller is driven solely by the electric motor.

Further, preferably the instruction means includes a single control lever that is rotatable and able to receive instructions mutually regarding the types of operating mode and the amount of output power from the source of driving force by means of the lever position.

According to a further preferred embodiment, the watercraft propulsion system further comprises a battery for accumulating electric power to be supplied to the electric motor, a charge level detecting means for detecting the amount of electricity remaining in the battery, and a first determination means for determining in the first mode whether the electric power should be charged to the battery by using the engine power generation or not based on the result from the detection by the charge level detecting means.

Therein, connection between the engine and the propeller may be disengaged in the first mode.

According to another preferred embodiment, the engine is operated at idle when the electric motor is driven by the electric power from the battery in the first mode.

Therein, it is beneficial if the watercraft propulsion system further comprises a battery for accumulating electric power to be supplied to the electric motor, a charge level detecting means for detecting the amount of electricity remaining in the battery, and a second determination means for determining in the first mode whether the electric motor should be driven by the electric power from the battery without restricting the output power of the electric motor, or the electric motor should be driven by the electric power from the battery restricting the output power of the electric motor based on the result from the detection by the charge level detecting means.

According to yet another preferred embodiment, the watercraft propulsion system further comprises a forward/reverse switching device provided in between the source of driving force and the propeller for setting the rotational direction of the propeller to the positive rotation by which the watercraft propulsion system runs forward, or to the reverse rotation by which the watercraft propulsion system runs backward, and a control means for controlling the operation of the forward/reverse switch device according to the instruction given by the instruction means.

According to still another preferred embodiment, the watercraft propulsion system comprises the battery for accumulating electric power to be supplied to the electric motor, and the charge level detecting means for detecting the amount of electricity remaining in the battery, wherein the propeller driving mode further includes a second mode in which the propeller is driven in reverse by the engine and the amount of output power from the engine is adjusted according to the instruction given by the instruction means, and the setting means is configured to set the propeller driving mode to the first mode or to the second mode, taking account of comparison between the result from the detection by the charge level detecting means and a first threshold as well.

Therein, the watercraft propulsion system may further comprise the first determination means for determining in the first mode whether the electric power should be charged to the battery by means of the engine power generation based on comparison between the result from the detection by the charge level detecting means and a second threshold.

According to a still further embodiment, the watercraft propulsion system further comprises a switching means for alternatively selecting to use or not to use the electric motor for driving the propeller, wherein the propeller driving mode further includes the second mode in which the propeller is driven in reverse by the engine and the amount of output power from the engine is adjusted according to the instruction given by the instruction means, and the setting means sets the propeller driving mode to the first mode or to the second mode, taking account of the setting of the switching means as well.

The objective for the method aspect is further solved in an inventive manner by an operating method for a watercraft propulsion system including an engine and an electric motor as a source of driving force for a propeller, comprising a first step in which an instruction is received regarding the types of operating mode as well as the amount of output power from the source of driving force, and comprising a second step in which a setting is made for a propeller driving mode according to the instruction received in the first step, wherein in the second step, the propeller driving mode is set to the first mode when the reverse mode or the trolling mode is instructed in the first step, in which the propeller is driven in reverse by the electric motor and the amount of output power from the electric motor is adjusted according to the instruction received in the first step.

In following, the present invention is explained in greater detail with respect to several embodiments thereof in conjunction with the accompanying drawings, wherein:
- FIG. 1: is an illustration showing a watercraft propulsion system according to one embodiment,
- FIG. 2: is an illustration showing a control lever,
- FIG. 3: is a chart showing the corresponding relations between the control lever position and the out put power from the source of driving force,
- FIG. 4: is a flow chart showing the overall operation of the watercraft propulsion system,
- FIG. 5: is a flow chart showing the operating mode determination process in step 17 of FIG. 4,
- FIG. 6: is a flow chart showing an example of the reverse operation process according to the embodiment shown in FIG. 1,
- FIG. 7: is a flow chart showing another example of reverse operation process,
- FIG. 8: is an illustration showing a watercraft propulsion system according to another embodiment,
- FIG. 9: is a flow chart showing an example of the reverse operation process according to the embodiment shown in FIG. 8,
- FIG. 10: is an illustration showing a watercraft propulsion system according to another embodiment,
- FIG. 11: is a flow chart showing an example of the reverse operation process according to the embodiment shown in FIG. 10,
- FIG. 12: is a flow chart showing another example of reverse operation process,
- FIG. 13: is an illustration showing a watercraft propulsion system according to still another embodiment,
- FIG. 14: is a flow chart showing an example of the reverse operation process according to the embodiment shown in FIG. 13, and
- FIG. 15: is a flow chart showing another example of reverse operation process.

### Description of Reference Numerals:

10, 10a, 10b, 10c: watercraft propulsion system
12: propeller
14: engine
16: electric motor
22: electromagnetic clutch
26: bevel gear
28: electric generator body
32: ignition device
34: throttle valve
36: engine speed sensor
38: throttle electric motor
40: throttle opening sensor
42: controller
44: main switch
46: control lever
48: drive/power generation switch
50: trouble lamp
52: battery
54: battery voltage sensor
56: forward / reverse switching device
58: engine switch

Now, an embodiment will be described below with reference to the drawings.

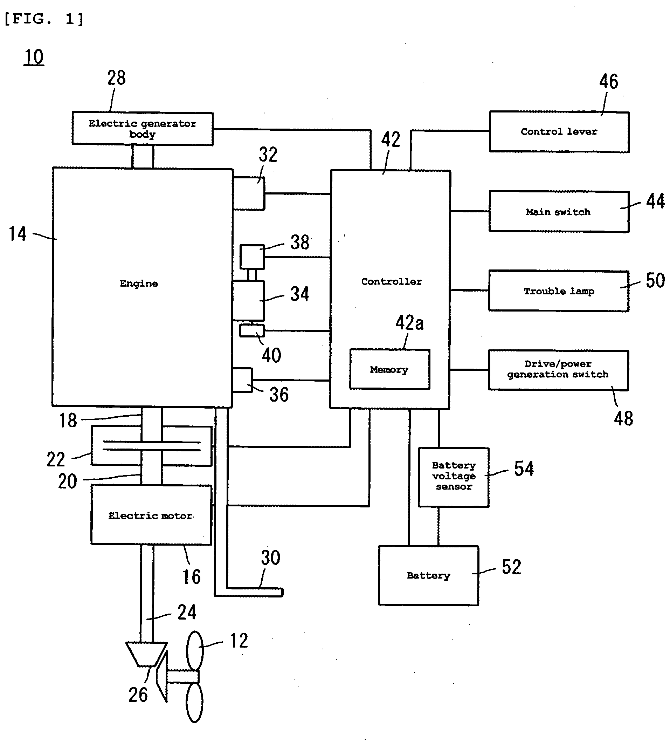

Referring to FIG.1, a watercraft propulsion system 10 according to an embodiment is of a hybrid type having a propeller 12, an engine 14 as a source of driving force for the propeller 12, and an electric motor 16, and is a center-motor type watercraft propulsion system in which the electric motor 16 is disposed between the engine 14 and the propeller 12. It should be noted that the watercraft propulsion system 10, as well as 10b and 10c that will be described later, may be configured as an outboard motor or as a part of the watercraft.

In the watercraft propulsion system 10, an electromagnetic clutch 22 is provided between a crankshaft 18 of the engine 14 and a rotor 20 of an electric motor 16. The crankshaft 18 and the rotor 20 are connected or separated by turning-on or turning-off the electromagnetic clutch 22. A driveshaft 24 is joined to the rotor 20 of the electric motor 16, and the driveshaft 24 is connected to the propeller 12 via a bevel gear 26. The rotational direction of the propeller 12 is decided by the rotational direction of the electric motor 16.

An electric generator body 28 used for engine power generation is disposed on the top of the engine 14, and the electric generator body 28 is provided on the upper end of the crankshaft 18. Also, an exhaust pipe 30 for discharging the exhaust gas into the water, an ignition device 32 for ignition of the engine 14, a throttle valve 34 for adjusting the amount of fuel delivered to the engine 14, and an engine speed sensor 36 for detecting the engine rpm (revolutions per minute) are provided on the engine 14. A throttle motor 38 for driving the throttle valve 34, and a throttle opening sensor 40 for detecting the opening of the throttle valve 34 are provided on the throttle valve 34. The exhaust pipe 30 is provided so that the exhaust opening is located in the rearward of the propeller 12.

The electric motor 16, the electromagnetic clutch 22, the electric generator body 28, the ignition device 32, the engine speed sensor 36, the throttle motor 38, and the throttle opening sensor 40 are connected to a controller 42. Further, a main switch 44 for starting (ON) or stopping (OFF) the operation of the watercraft propulsion system 10, a control lever 46 for giving instructions on the types of operating mode as well as on the amount of output power from the source of driving force, a drive / power generation switch 48 for selectively setting the driving function or power generation function, a trouble lamp 50 to make a trouble annunciation, a battery 52 composed of a 24V battery, for instance, and a battery voltage sensor 54 for detecting the voltage of the battery 52 are connected to the controller 42.

The controller 42 is furnished with; the signals indicating the opening of the throttle valve 34 by the throttle opening sensor 40, the signals indicating the rpm of the engine 14 by the engine speed sensor 36, the ON / OFF signals by the main switch 44, the lever position signals indicating the type of operating mode and the amount of output power from the source of driving force by the control lever 46, the setting signals indicating driving function or power generation function by the drive / power generation switch 48, and the signals indicating the battery voltage by the battery voltage sensor 54. In addition, an electric power obtained by the engine power generation at the electric generator body 28 charges up the battery 52 via the controller 42.

Further, the controller 42 gives; the ignition instructions to the ignition device 32, the driving signals to the throttle motor 38, the ON/OFF signals to the electromagnetic clutch 22, the driving signals and the electric power from the battery 52 to the electric motor 16, and the lamp lighting signals to the trouble lamp 50.

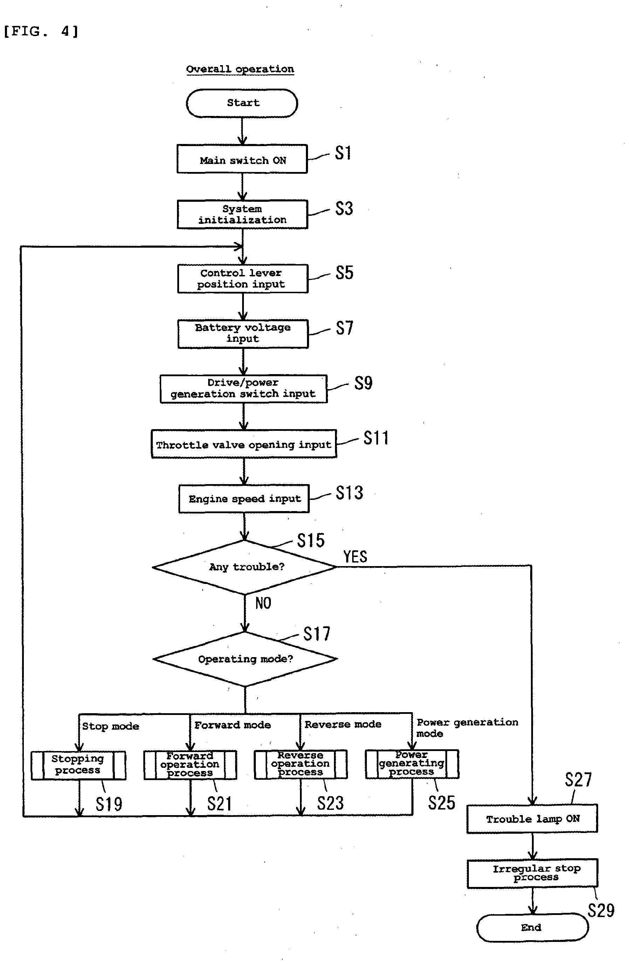

Additionally, the controller 42 includes a memory 42a. A program for implementing the operations shown in FIGs. 4 through 7 are stored in the memory 42a. Further, operation data, a specified value to be compared with the battery voltage, the table data showing the corresponding relation between the position of the control lever 46 and the output power from the source of driving force, and so on are stored in the memory 42a.

In the present embodiment, the control lever 46 represents an instruction means. The controller 42 represents a setting means, a first determination means, and a second determination means. The battery voltage sensor 54 represents a charge level detecting means.

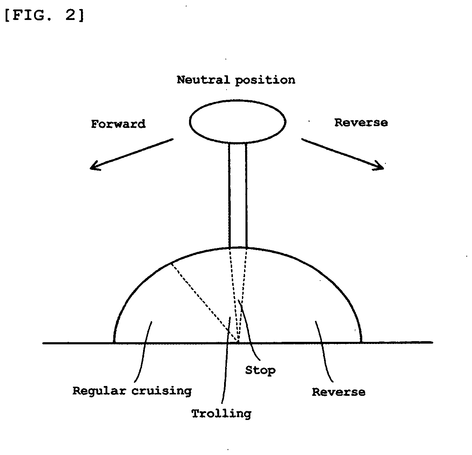

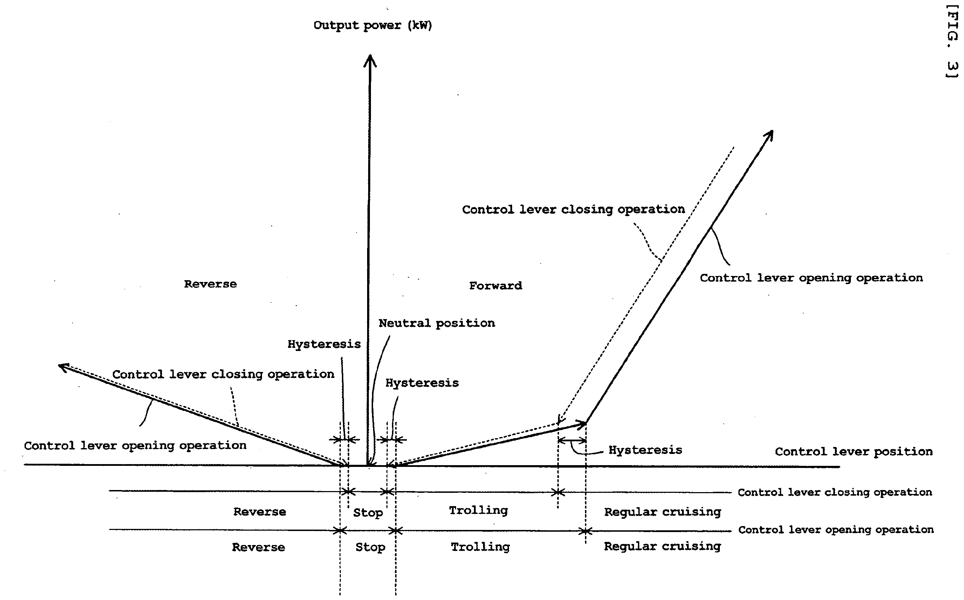

Next, referring to FIGs 2 and 3, the relationship between the position of the control lever 46 and the types of operating mode, or the output power from the source of driving force will be described.

As shown in FIG. 2, the control lever 46, rotatable in forward and backward, can give an instruction on the types of operating mode (regular cruising, trolling, stop, or reverse) by its lever position, and at the same time, it can give an instruction on the amount of output power from the source of driving force by its lever position as shown in FIG. 3.

The prescribed range extending in the forward and backward direction around the neutral position of the control lever 46 is a stop mode, the prescribed range in the forward side of the stop mode range is a trolling mode, and the range farther in the forward side of the trolling mode range is a regular cruising mode. Also, the range in the backward section of the stop mode range is a reverse mode.

In this arrangement, instructions for the types of operating mode and the amount of output power from the source of driving force can be given easily and continuously by the rotating operation of the control lever 46, resulting in the remarkable improvement of the controllability.

Further, as shown in FIG. 3, the so called hysteresis is provided by which the mode switching position of the control lever 46 is different in the opening operation that moves the control lever farther from the neutral position in comparison with such position in the closing operation that moves the control lever closer to the neutral position. In this way, some "play" is provided in the mode switching process, preventing frequent mode switching around the boundary of the abutting modes.

Overall operation of such watercraft propulsion system will be described with reference to FIG. 4.

First, the system is initialized (step S3) when the main switch 44 is pressed down (step S1). The system initialization includes setting of the electromagnetic clutch 22 at OFF state, for instance.

Next, the lever position signal of the control lever 46 is input into the controller 42 (step S5), and the signal indicating the battery voltage detected by the battery voltage sensor 54 is input into the controller 42 (step S7). Further, the setting signal from the drive / power generation switch 48 is input into the controller 42 (step S9), followed by the input of the signal indicating the opening of the throttle valve 34 (throttle position) detected by the throttle opening sensor 40 (step S11), and the input of the signal indicating the engine rpm detected by the engine speed sensor 36 (step S13). The controller 42 detects any trouble in the watercraft propulsion system 10 based on these input information (step S15), and the operating mode is determined if there is no trouble (step S17).

The stopping process is implemented if the operating mode is the stop mode (step S19), the forward operation process is implemented if it is a forward mode (step S21), the reverse operation process is implemented if it is the reverse mode (step S23), and the power generating process is implemented if it is the power generation mode (step S25). Then, the process returns to the step S5.

On the contrary, if any trouble is detected in the watercraft propulsion system 10 in step S15, the trouble lamp 50 comes on according to the instruction by the controller 42 (step S27), the irregular stop process is implemented (step S29), and the process is terminated.

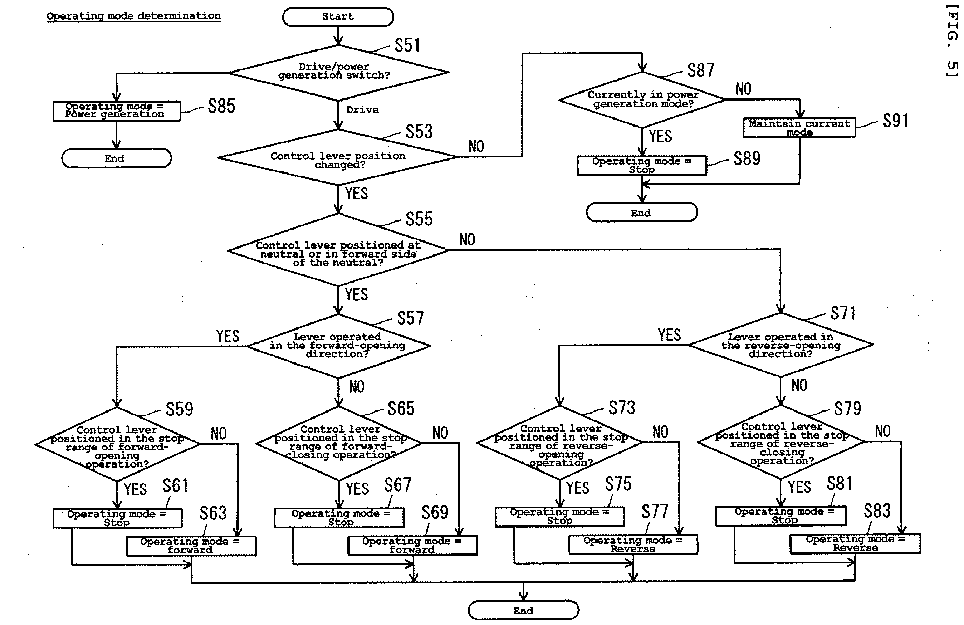

Here, operating mode determination process shown as the step S17 in FIG. 4, will be explained in detail with reference to FIG. 5.

First, the controller 42 determines whether the setting signal from the drive / power generation switch 48 indicates power generation or driving (step S51), and if the signal indicates driving, the controller 42 determines whether the position of the control lever 46 has changed or not (step S53). If the lever position has changed, determination is made whether the control lever 46 is at the neutral position or in the forward side of the neutral position (step S55). If the control lever 46 is at the neutral position or in the forward side of the neutral position, then, determination is made whether the operating direction of the control lever 46 is in the forward-opening direction (step S57). The operating direction of the control lever 46 can be determined based on the lever position in the previous control cycle and that in the present control cycle.

If the operating direction of the lever is determined to be in the forward-opening direction in step S57, then, determination is made whether the control lever 46 is positioned in the stop range associated with the forward-opening operation (step S59). If the lever is positioned in the stop range, the operating mode is determined to be the stop mode (step S61). On the contrary, if the lever is not positioned in the stop range associated with the forward-opening operation in step S59, the operating mode is determined to be the forward mode (step S63). When the operating mode is determined to be the forward mode, it is initially determined to be the trolling mode.

If the operating direction of the control lever 46 is determined to be in the forward-closing direction in step S57, then, determination is made whether the lever is positioned in the stop range associated with the forward-closing operation (step S65). If the lever is positioned in the stop range, the operating mode is determined to be the stop mode (step S67). On the contrary, if the lever is not positioned in the stop range associated with the forward-closing operation in step S65, the operating mode is determined to be the forward mode (step S69).

If the control lever 46 is in the reverse side relative to the neutral position in step S55, then, the process goes to step S71. In step S71, determination is made whether the operating direction of the control lever 46 is in the reverse-opening direction, then, if it is in the reverse-opening direction, determination is made whether the lever is positioned in the stop range associated with the reverse-opening operation (step S73). If the lever is positioned in the stop range, the operating mode is determined to be the stop mode (step S75). On the contrary, if the lever is not positioned in the stop range associated with the reverse-opening operation in step S73, the operating mode is determined to be the reverse mode (step S77).

If the operating direction of the control lever 46 is determined to be in the reverse-closing direction in step S71, then, determination is made whether the lever is positioned in the stop range associated with the reverse-closing operation (step S79). Then, if the lever is positioned in the stop range, the operating mode is determined to be the stop mode (step S81). On the contrary, if the lever is not positioned in the stop range associated with the reverse-closing operation in step S79, the operating mode is determined to be the reverse mode (step S83).

Further, if the drive / power generation switch 48 is set for power generation in step S51, the operating mode is determined to be the power generation mode (step S85).

If there is no change in the position of the control lever 46 in step S53, determination is made whether the present mode is the power generation mode or not (step S87). If the present mode is the power generation mode, the operating mode is determined to be the stop mode (step S89). On the other hand, if the present mode is not the power generation mode in step S87, then, the present mode is maintained (step S91).

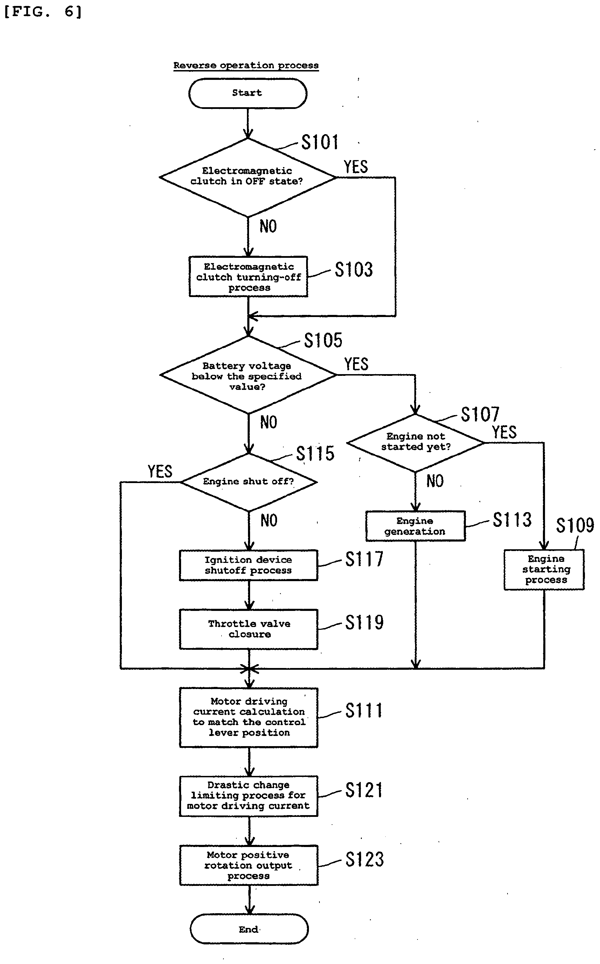

Next, an operation example regarding the reverse operation process shown in FIG. 4 as step S23 will be described with reference to FIG. 6.

When the controller 42 determines that the operating mode is the reverse mode, the propeller driving mode is set to a first mode in which the propeller 12 is rotated in reverse by means of the electric motor 16, and the amount of output power from the electric motor 16 is adjusted according to the instruction given by the control lever 46. In other words, step S101 and the subsequent processes are implemented.

First, the controller 42 determines whether the electromagnetic clutch 22 is turned off or not (step S101). If the electromagnetic clutch 22 is turned on, the turning-off process for the electromagnetic clutch 22 is implemented (step S103), and the process goes to step S105. If the electromagnetic clutch 22 is turned off, the process goes to step S105 directly.

In step S105, the controller 42 determines whether the voltage of the battery 52 is below the specified value or not (step S105).

If the battery voltage is below the specified value, the controller 42 determines the motor driving mode to be a third mode, in which the electric motor 16 is driven by the electric power from the battery 52, and in parallel, the electric power obtained by the engine power generation is charged into the battery 52. In other words, the process goes to step S107. Then, determination is made in step S107 whether the engine has not been started yet. If the engine has not been started yet, the engine starting process is implemented (step S109), and the process goes to step S111.

On the other hand, if the engine has already been started in step S107, the engine speed is controlled to obtain the prescribed amount of power generation, the engine power generation is implemented (step S113), and then, the process goes to step S111.

On the other hand, if the battery voltage exceeds the specified value in step S105, the controller 42 determines the motor driving mode to be a fourth mode, in which the electric motor 16 is driven by the electric power from the battery 52. In other words, the process goes to step S115. Since the engine start is not required in the fourth mode, determination is made whether the engine 14 is stopping or not in step S115. If the engine 14 is stopping, the process goes to step S111, but if the engine 14 is running, the shutoff process for the ignition device 32 is implemented (step S117), the throttle valve 34 is closed (S119), and then, the process goes to S111.

In step S111, the controller 42 calculates the electric motor driving current to be supplied to the electric motor 16, with reference to the table data showing the corresponding relations of FIG. 3, so that the motor output power is obtained in response to the position of the control lever 46. Then, the drastic change limiting process is implemented to prevent the electric motor driving current from changing sharply (step S121), the reverse rotation output process for the electric motor 16 is implemented (step S123).

The processes described above makes the watercraft propulsion system 10 run backward by rotating the propeller 12 in reverse, and then, the processes are terminated.

According to the operation example described above, instructions for the types of operating mode as well as the amount of output power from the source of driving force can be given easily and continuously by the rotating operation of the single control lever 46, resulting in the simple control of the engine 14 and the electric motor 16. Especially, the forward mode or the stop mode can be switched to the reverse mode by a simple operation using a single control lever 46. Additionally in the reverse mode, the propeller driving by means of the electric motor 16 can make the watercraft propulsion system 10 run backward smoothly, and at the same time the exhaust gas and the noise during the reverse operation can be suppressed.

Also, in the first mode, the electric motor 16 is driven by the electric power supplied by the battery 52 when the battery voltage exceeds the specified value, while on the other hand, the electric motor 16 is driven by the electric power supplied by the battery 52, and in parallel, the electric power obtained by the engine power generation is charged into the battery 52 when the battery voltage is below the specified value. In this way, deterioration of the battery 52 due to over discharge can be prevented.

Further in the first mode, when the electric power is supplied by the engine power generation using the engine 14, with the propeller 12 being separated by turning-off the electromagnetic clutch 22, the engine speed can be controlled regardless of the rotational speed of the propeller 12, and the adequate amount of charging power can be obtained.

In addition, during the propeller driving by means of the electric motor 16, since no exhaust gas is discharged toward the rear of the propeller 12, there will be no power loss due to the jet flow of the exhaust gas. Further, ventilation is prevented because no exhaust gas is entangled in the propeller 12.

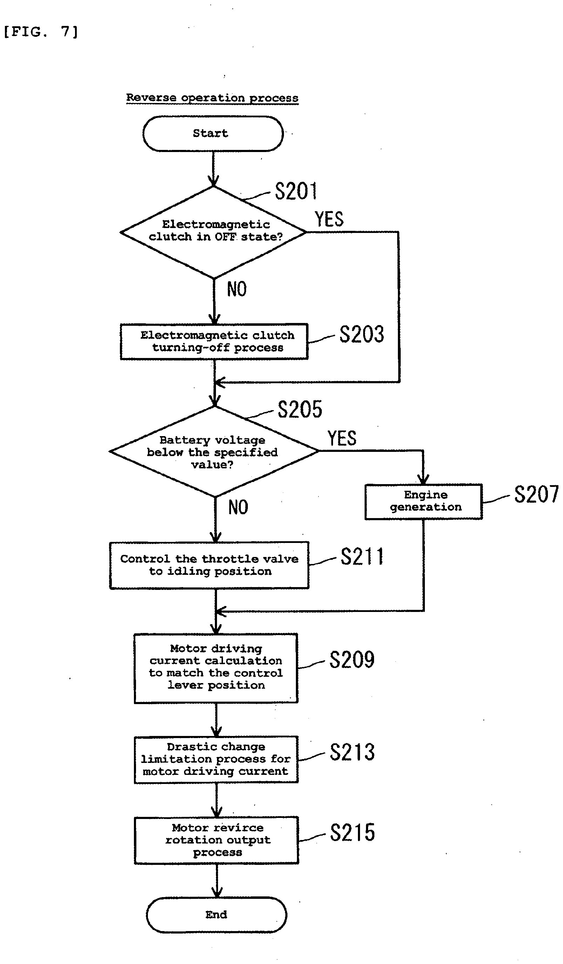

Next, another operation example regarding the reverse operation process for the watercraft propulsion system 10 will be explained with reference to FIG. 7.

When the controller 42 determines that the operating mode is the reverse mode, the propeller driving mode is set to the first mode, and the step S201 and the subsequent processes are implemented.

First, the controller 42 determines whether the electromagnetic clutch 22 is turned off or not (step S201). If the electromagnetic clutch 22 is turned on, the turning-off process for the electromagnetic clutch 22 is implemented (step S203), and the process goes to step S205. If the electromagnetic clutch 22 is turned off, the process goes to step S205 directly.

In step S205, the controller 42 determines whether the voltage of the battery 52 is below the specified value or not.

If the battery voltage is below the specified value, the engine speed is controlled to obtain the prescribed amount of power generation, the engine power generation is implemented (step S113), and then, the process goes to step S111.

On the other hand, if the battery voltage exceeds the specified value in step S205, the throttle valve 34 is controlled to the idling position by the controller 42 (step S211), and the process goes to step S209.

In step S209, the controller 42 calculates the electric motor driving current with reference to the table data showing the corresponding relations of FIG. 3, so that the motor output power is obtained in response to the position of the operating lever 46. Then, the drastic change limiting process is implemented to prevent the electric motor driving current from changing sharply (step S213), the reverse rotation output process for the electric motor 16 is implemented (step S215).

Through the processes described above, the watercraft propulsion system 10 runs backward by rotating the propeller 12 in reverse, and then, the processes is terminated.

In this operation example, the engine 14 is operated at idle while the electric motor 16 is driven by the electric power from the battery 52 in the first mode, allowing swift transition to a second mode without re-starting the engine 14 thereafter.

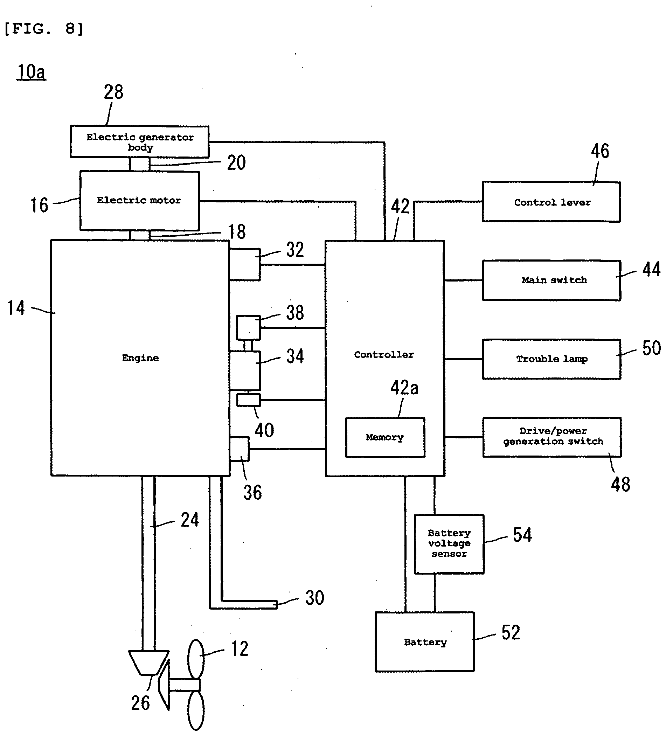

Next, a watercraft propulsion system 10a according to another embodiment will be described with reference to FIG. 8.

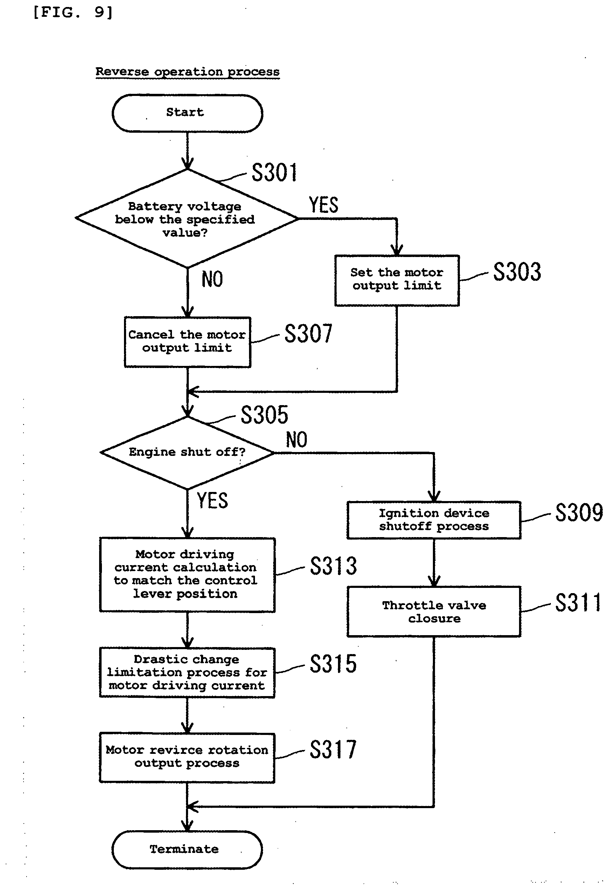

The watercraft propulsion system 10a is configured as the motor on top type in which the electric motor 16 is provided on the top of the engine 14 without using the electromagnetic clutch 22. In addition, the driveshaft 24 is joined to the lower end of the crankshaft 18 of the engine 14, the rotor 20 of the electric motor 16 is joined to the upper end of the crankshaft 18, and the electric generator body 28 is provided on the upper end of the rotor 20. A program for implementing the operations shown in FIG. 9 and other items are stored in the memory 42a. The rest of the configuration is the same as the watercraft propulsion system 10, and the description for the duplicated part will be skipped.

An operation example regarding the reverse operation process of the watercraft propulsion system 10a will be described with reference to FIG. 9.

When the controller 42 determines that the operating mode is the reverse mode, the propeller driving mode is set to the first mode, and the step S301 and the subsequent processes are implemented.

First, the controller 42 determines whether the voltage of the battery 52 is below the specified value or not (step S301).

If the battery voltage is below the specified value, the controller 42 determines the motor driving mode to be a fifth mode, in which the output power of the electric motor 16 is restricted so that it is driven by the electric power from the battery 52. In other words, the process goes to step S303. The restriction on the output power of the electric motor 16 is set in step S303, and the process goes to step S305.

On the other hand, if the battery voltage is not below the specified value, the controller 42 determines the motor driving mode to be a sixth mode, in which the electric motor 16 is driven by the electric power from the battery 52 without restricting the output power of the electric motor 16. In other words, the process goes to step S307. The restriction on the output power of the electric motor 16 is removed in step S307, and the process goes to step S305.

In step S305, determination is made whether the engine 14 is stopping or not. If the engine 14 is running, the shutoff process for the ignition device 32 is implemented (step S309), and the throttle valve 34 is closed (step S311).

On the other hand, if the engine 14 is stopping in step S305, the controller 42 calculates the electric motor driving current with reference to the table data showing the corresponding relations of FIG. 3, so that the motor output power is obtained in response to the position of the operating lever 46 (step S313). Then, the drastic change limiting process for motor driving current is implemented (step S315), and the reverse rotation output process for the electric motor 16 is implemented (step S317).

Through the processes described above, the watercraft propulsion system 10a runs backward by rotating the propeller 12 in reverse, and then, the processes is terminated.

According to this operation example, the propeller 12 can be driven by the electric motor 16 without fail in the first mode, because the output power of the electric motor 16 is adjusted in response to the battery voltage.

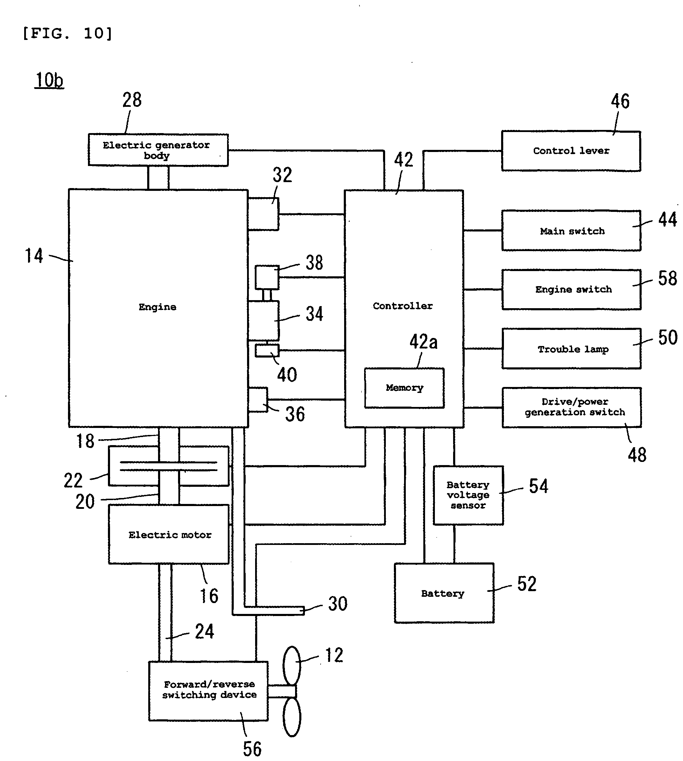

Next, a watercraft propulsion system 10b according to another embodiment will be described with reference to FIG. 10.

The watercraft propulsion system 10b is additionally provided with a forward / reverse switching device 56 to replace the bevel gear 26, and an engine switch 58 connected to the controller 42.

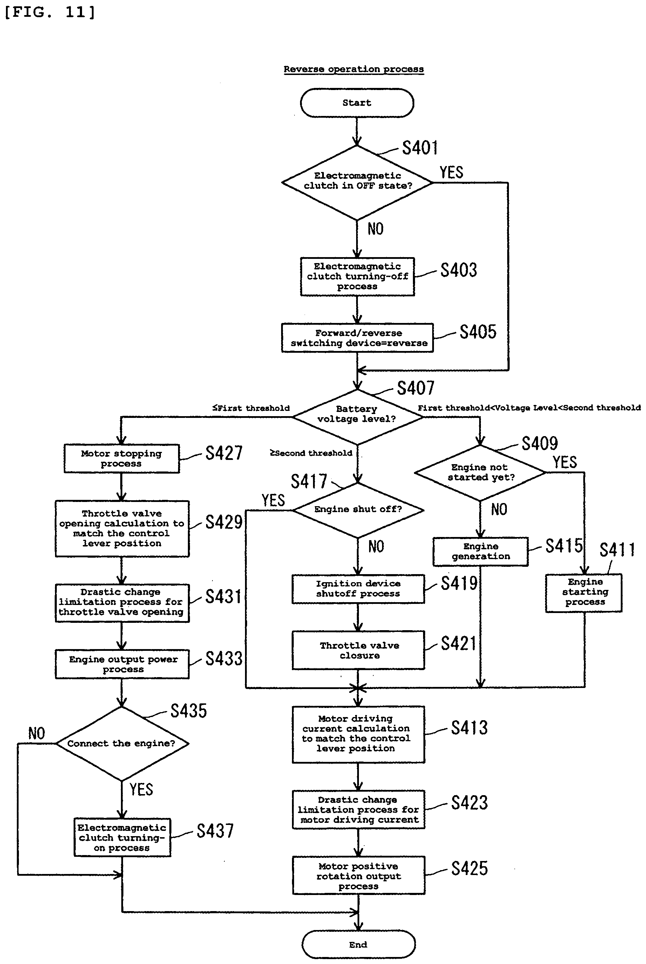

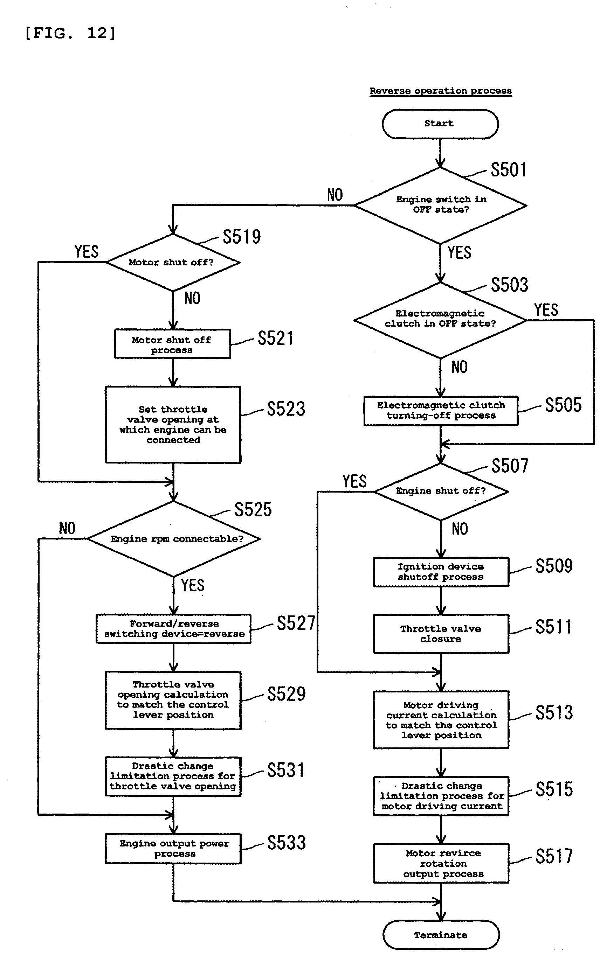

The forward / reverse switching device 56 sets the rotational direction of the propeller 12 either to the positive rotation by which the watercraft propulsion system 10b runs forward, or to the reverse rotation by which the watercraft propulsion system 10b runs backward according to the instruction given by the controller 42. The forward / reverse switching device 56 is a common dog clutch as can be found on outboard motors, for instance, that is operated by an electric actuator. The engine switch 58 represents a switching means to change between using or not using the electric motor 16 for driving the propeller. Also, a program for implementing the operations shown in FIGs. 11 and 12, first and the second thresholds to be compared with the battery voltage, first and the second prescribed values to be compared with the rpm of the engine 14, and so on are stored in the memory 42a. The controller 42 represents a control means. The rest of the configuration is the same as the watercraft propulsion system 10, and the description for the duplicated part will be skipped.

An operation example regarding the reverse operation process of the watercraft propulsion system 10b will be described with reference to FIG. 11.

First, the controller 42 determines whether the electromagnetic clutch 22 is turned off or not (step S401). If the electromagnetic clutch 22 is turned on, the turning-off process for the electromagnetic clutch 22 is implemented by the controller 42 (step S403), the forward / reverse switching device 56 is set to reverse (so that the propeller 12 rotates in reverse) (step S405), and the process goes to step S407. If the electromagnetic clutch 22 is turned off, the process goes to step S407 directly.

In step S407, the controller 42 compares the voltage of the battery 52 with the first threshold, and with the second threshold. When the first threshold is below the battery voltage (first threshold < battery voltage), the controller 42 sets the propeller driving mode to the first mode.

Especially, when the first threshold is below the battery voltage and the battery voltage is below the second threshold (first threshold < battery voltage < second threshold), then, the controller 42 determines the motor driving mode to be a third mode, and the determination is made whether the engine has not been started yet (step S409). If the engine has not been started yet, the engine starting process is implemented (step S411), and the process goes to step S413.

On the other hand, if the engine has already been started in step S409, the engine speed is controlled to obtain the prescribed amount of power generation, the engine power generation is implemented (step S415), and then, the process goes to step S413.

When the battery voltage is equal or larger than the second threshold (battery voltage ≥ second threshold) in step S407, then, the controller 42 determines the motor driving mode to be a fourth mode, and the determination is made whether the engine 14 is stopping or not (step S417). If the engine 14 is stopping, the process goes to step S413, but if the engine 14 is running, the shutoff process for the ignition device 32 is implemented (step S419), the throttle valve 34 is closed (S421), and then, the process goes to S413.

In step S413, the controller 42 calculates the electric motor driving current with reference to the table data showing the corresponding relations of FIG. 3, so that the motor output power is obtained in response to the position of the operating lever 46. Then, the drastic change limiting process is implemented to prevent the electric motor driving current from changing sharply (step S423), the positive rotation output process for the electric motor 16 is implemented (step S425).

On the other hand, if the battery voltage is equal to or smaller than the first threshold in step S407, the controller 42 sets the propeller driving mode to the second mode in which the propeller 12 is rotated in reverse by means of the engine 14, and at the same time the amount of output power from the engine 14 is adjusted according to the instruction given by the control lever 46. In other words, step S427 and the subsequent processes are implemented.

In step S427, stopping process for the electric motor 16 is implemented, and the controller 42 calculates the opening of the throttle valve 34 with reference to the table data showing the corresponding relations of FIG. 3, so that the engine output power is obtained in response to the position of the control lever 46 (step S429). Then, the drastic change limiting process is implemented to prevent the opening of the throttle valve 34 from changing sharply (step S431), and the output power process for the engine 14 is implemented (step S433). Then, determination is made whether the engine 14 is to be connected or not, namely, whether the electromagnetic clutch 22 is to be turned on or not (step S435). The process is terminated if the engine rpm is below the first prescribed value (1200rpm, for instance), while on the other hand, if the engine rpm is at or higher than the first prescribed value, it is determined that the engine 14 can be connected, and the electromagnetic clutch 22 turning-on process is implemented (step S437).

Through the processes described above, the watercraft propulsion system 10b runs backward by rotating the propeller 12 in reverse, and then, the processes is terminated.

According to this operation example, the use of forward / reverse switching device 56 allows the rotational direction of the propeller 12 to be switched without changing the rotational direction of the electric motor 16, keeping the positive rotation of the electric motor 16.

Also, the propeller drive mode is set to the first mode or to the second mode, taking account of not only the operating mode, but also comparison between the battery voltage and the first threshold. For instance, even if the operating mode is instructed to be the reverse mode, sometimes it is hard to drive the propeller 12 by the electric motor 16 in the first mode when the battery voltage is equal to or below the first threshold (battery voltage first threshold). In such cases, the second mode can be used to drive the propeller 12.

Further in the first mode, the electric motor 16 is driven by the electric power supplied by the battery 52 when the battery voltage is equal to or larger than the second threshold (battery voltage ≧ second threshold), while on the other hand, the electric motor 16 is driven by the electric power supplied by the battery 52, and in parallel, the electric power obtained by the engine power generation is charged into the battery 52 when the first threshold is below the battery voltage and at the same time the battery voltage is equal to or below the second threshold (first threshold < battery voltage ≦ second threshold). In this way, deterioration of the battery 52 due to over discharge can be prevented.

In the second mode, the engine 14 is connected to the propeller 12 by turning-on the electromagnetic clutch 22 when the speed of the engine 14 exceeds the first prescribed value, thus the engine 14 is connected to the propeller 12 smoothly.

Also, another operation example regarding the reverse operation process for the watercraft propulsion system 10b will be explained with reference to FIG. 12.

First, the controller 42 determines whether the engine switch 58 is turned off or not (step S501). If the engine switch 58 is turned off, the controller 42 sets the propeller driving mode to the first mode. In other words, the process goes to step S503, and the following process is implemented.

In step S503, determination is made whether the electromagnetic clutch 22 is turned off or not. If the electromagnetic clutch 22 is turned on, the turning-off process for the electromagnetic clutch 22 is implemented by the controller 42 (step S505), and the process goes to step S507. If the electromagnetic clutch 22 is turned off, the process goes to step S407 directly.

In step S507, determination is made if the engine 14 is stopping or not. If the engine 14 is running, the shutoff process for the ignition device 32 is implemented (step S509), the throttle valve 34 is closed (step S511), and the process goes to step S513. If the engine 14 is stopping, the process goes to S513 directly.

In step S513, the controller 42 calculates the electric motor driving current with reference to the table data showing the corresponding relations of FIG. 3, so that the motor output power is obtained in response to the position of the operating lever 46. Then, the drastic change limiting process is implemented to prevent the electric motor driving current from changing sharply (step S515), the reverse rotation output process for the electric motor 16 is implemented (step S517).

On the other hand, if the engine switch 58 is turned on in step S501, the controller 42 sets the propeller driving mode to the second mode. In other words, the process goes to step S519, and the following process is implemented.

In step S519, determination is made whether the electric motor 16 is stopping or not. If the electric motor 16 is running, the stopping process for the electric motor 16 is implemented (step S521), opening of the throttle valve 34 is set to the position at which the engine rpm required to connect the engine is obtained (step S523, and the process goes to S525. On the other hand, if the electric motor 16 is stopping in step S519, the process goes to step S525 directly.

In step S525, determination is made whether the rpm of the engine 14 has reached the second prescribed value (1200rpm, for instance), at which the engine 14 can be connected. If the rpm of the engine 14 has reached the second prescribed value, the forward / reverse switching device 56 is set to reverse (step S527), and the process goes to S529.

In step S529, the controller 42 calculates the opening of the throttle valve 34 with reference to the table data showing the corresponding relations of FIG. 3, so that the engine output power is obtained in response to the position of the control lever 46. Then, the drastic change limiting process is implemented to prevent the opening of the throttle valve 34 from changing sharply (step S531), and the output power process for the engine 14 is implemented (step S533). On the other hand, if the rpm of the engine 14 has not reached the second prescribed value in step S525, the process goes to S533 directly.

Through the processes described above, the watercraft propulsion system 10b runs backward by rotating the propeller 12 in reverse, and then, the processes is terminated.

According to this operation example, if the engine switch 58 is turned on in advance to avoid the use of electric motor 16, the propeller 12 can be driven in reverse in the second mode, namely, driven by using the engine 14, even if the operating mode is the reverse mode, allowing a flexible response to the operator's demand.

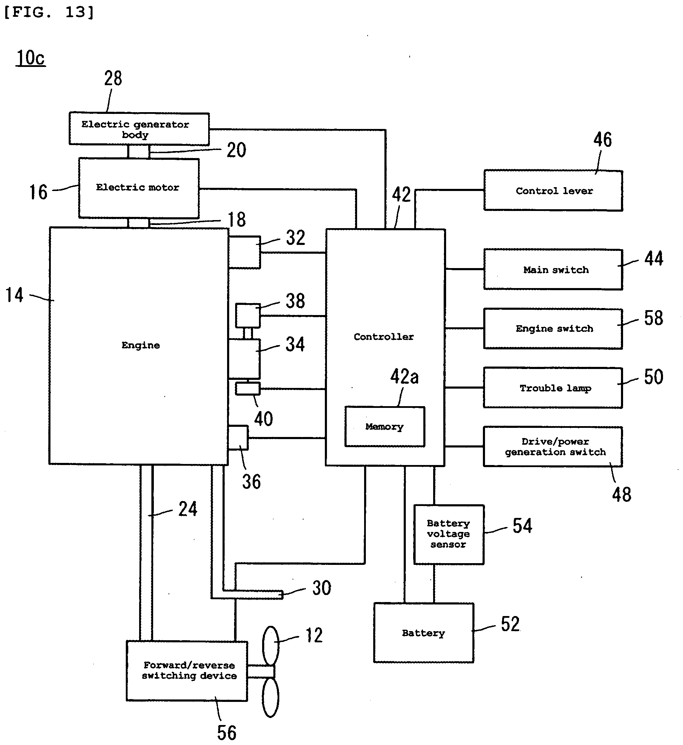

Further, a watercraft propulsion system 10c according to another embodiment will be described with reference to FIG. 13.

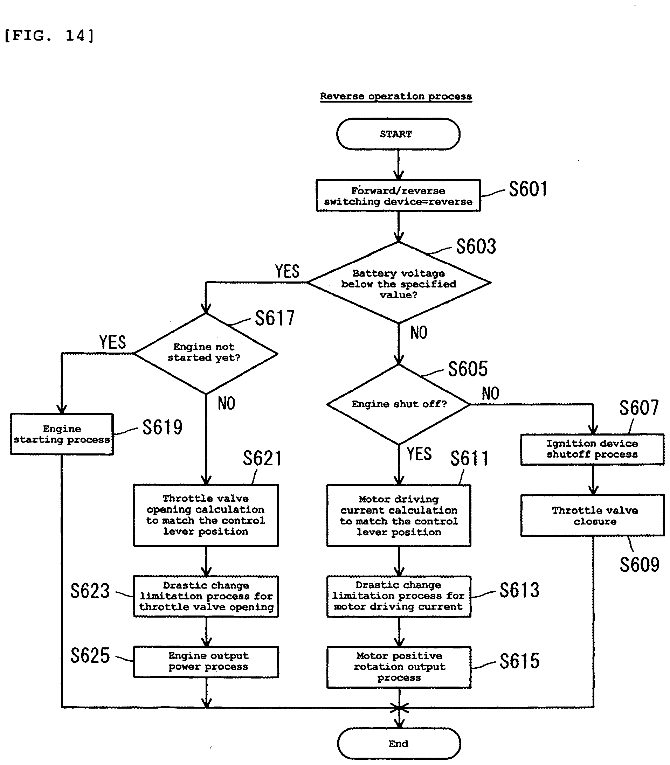

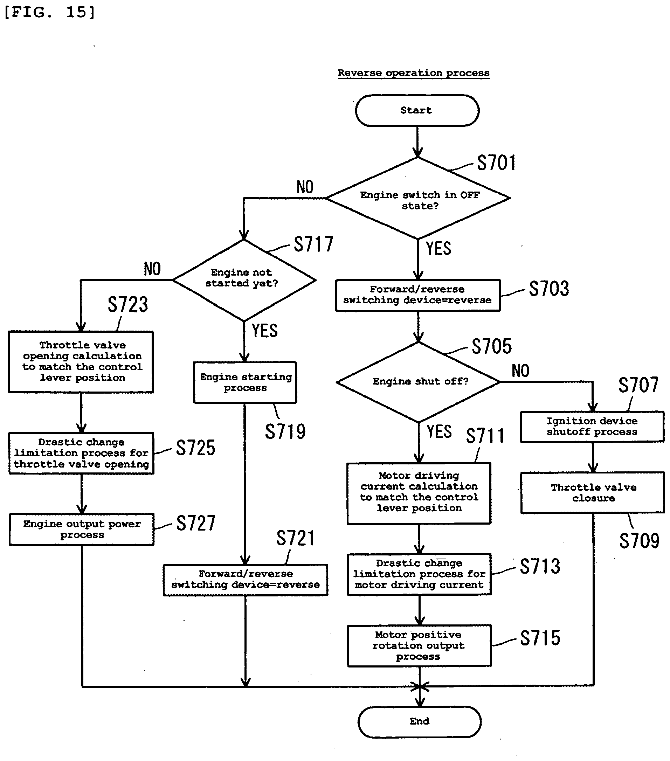

The watercraft propulsion system 10c is additionally provided with a forward / reverse switching device 56 to replace the bevel gear 26 of the watercraft propulsion system 10a, and an engine switch 58 connected to the controller 42. A program for implementing the operations shown in FIGs. 14 and 15, and other items are stored in the memory 42a. The rest of the configuration is the same as the watercraft propulsion system 10a, and the description for the duplicated part will be skipped.

An operation example regarding the reverse operation process of the watercraft propulsion system 10c will be described with reference to FIG. 14.

When the controller 42 determines that the operating mode is the reverse mode, the forward / reverse switching device 56 is set to reverse (step S601), and the determination is made whether the voltage of the battery 52 is below the specified value or not (step S603). If the battery voltage exceeds the specified value, then, the controller 42 sets the propeller driving mode to the first mode, and the determination is made whether the engine 14 is stopping or not (step S605). If the engine 14 is running, the shutoff process for the ignition device 32 is implemented (step S607), the throttle valve 34 is closed (step S609).

On the other hand, if the engine 14 is stopping in step S605, the controller 42 calculates the electric motor driving current with reference to the table data showing the corresponding relations of FIG. 3, so that the motor output power is obtained in response to the position of the operating lever 46 (step S611). Then, the drastic change limiting process for motor driving current is implemented (step S613), and the positive rotation output process for the electric motor 16 is implemented (step S615).

On the other hand, if the battery voltage is below the specified value in step S603, the controller 42 sets the propeller driving mode to the second mode, and the determination is made whether the engine has not been started yet (step S617). If the engine has not been started yet, the engine starting process is implemented (step S719) using the electric motor 16 provided on the top of the engine 14 as a starter motor (step S619). On the other hand, the engine has already started in step S617, the controller 42 calculates the opening of the throttle valve 34 with reference to the table data showing the corresponding relations of FIG. 3, so that the engine output power is obtained in response to the position of the control lever 46 (step S621). Then, the drastic change limiting process is implemented for the opening of the throttle valve 34 (step S623), and the output power process for the engine 14 is implemented (step S625).

Through the processes described above, the watercraft propulsion system 10c runs backward by rotating the propeller 12 in reverse, and then, the processes is terminated.

According to this operation example, the propeller drive mode is set to the first mode or to the second mode, taking account of not only the operation mode, but also comparison between the battery voltage and the specified value. For instance, even if the operating mode is instructed to be the reverse mode, sometimes it is hard to drive the propeller 12 by the electric motor 16 using the first mode when the battery voltage is at or below the specified value. In such cases, the second mode can be used to drive the propeller 12.

Further, another operation example regarding the reverse operation process for the watercraft propulsion system 10c will be explained with reference to FIG. 15.

First, determination is made whether the engine switch 58 is turned off or not (step S701). If he engine switch 58 is turned off, the controller 42 sets the propeller driving mode to the first mode, then, the process goes to S703, and the controller sets the forward / reverse switching device 56 to reverse.

Next, determination is made whether the engine 14 is stopping or not (step S705). If the engine 14 is running, the shutoff process for the ignition device 32 is implemented (step S707), the throttle valve 34 is closed (step S709).

If the engine 14 is stopping in step S705, the controller 42 calculates the electric motor driving current with reference to the table data showing the corresponding relations of FIG. 3, so that the motor output power is obtained in response to the position of the operating lever 46 (step S711). Then, the drastic change limiting process is implemented to prevent the electric motor driving current from changing sharply (step S713), the positive rotation output process for the electric motor 16 is implemented (step S715).

On the other hand, if the engine switch 58 is turned on in step S701, the controller 42 sets the propeller driving mode to the second mode, the process goes to step S717, and the determination is made whether the engine has not been started yet. If the engine has not been started yet, the engine starting process is implemented (step S719) using the electric motor 16 provided on the top of the engine 14 as a starter motor, and the forward / reverse switching device 56 is set to reverse (step S721). On the other hand, the engine has already been started in step S717, the controller 42 calculates the opening of the throttle valve 34 with reference to the table data showing the corresponding relations of FIG. 3, so that the engine output power is obtained in response to the position of the control lever 46 (step S723). Then, the drastic change limiting process is implemented for the opening of the throttle valve 34 (step S725), and the output power process for the engine 14 is implemented (step S727).

Through the processes described above, the watercraft propulsion system 10c runs backward by rotating the propeller 12 in reverse, and then, the processes is terminated.

According to this operation example, if the engine switch 58 is turned on in advance to avoid the use of electric motor 16, the propeller 12 can be driven in the second mode, namely driven by the engine 14, even when the operating mode is the reverse mode, allowing a flexible response to the operator's demand.

It should be noted that the instruction means may be a joystick lever.

Also, the battery voltage sensor 54 is used as the charge level detecting means in the embodiments described above, however, the charge level detecting means is not limited to the battery voltage sensor 54, but some other means may be employed which detects the battery charge level based on the electric current and the elapsed time, for instance.

The description above discloses (amongst others), in order to attain the objective described above, a watercraft propulsion system including an engine and an electric motor as a source of driving force for a propeller, and having an instruction means for giving instructions regarding the types of operating mode as well as the amount of output power from the source of driving force, along with a setting means for setting the propeller driving mode according to the instruction given by the instruction means, and is characterized in that the setting means sets a propeller driving mode to the first mode when a reverse mode is instructed by the instruction means, in which the propeller is driven in reverse by the electric motor, and the amount of output power from the electric motor is adjusted according to the instruction given by the instruction means (first embodiment).

Further, a watercraft propulsion system of a second preferred embodiment is the watercraft propulsion system of the first embodiment, wherein the instruction means includes a control lever that is rotatable and able to give instructions regarding the types of operating mode and the amount of output power from the source of driving force by means of the lever position.

Further, a watercraft propulsion system of a third preferred embodiment is the watercraft propulsion system of the first embodiment, wherein it additionally includes a battery for accumulating electric power to be supplied to the electric motor, a charge level detecting means for detecting the amount of electricity remaining in the battery, and a first determination means for determining whether the electric power should be charged to the battery by using the engine power generation based on the result from the detection by the charge level detecting means.

Further, a watercraft propulsion system of a fourth preferred embodiment is the watercraft propulsion system of the third embodiment, wherein connection between the engine and the propeller is disengaged in the first mode.

Further, a watercraft propulsion system of a fifth preferred embodiment is the watercraft propulsion system of the first embodiment, wherein the engine is operated at idle when the electric motor is driven by the electric power from the battery in the first mode.

Further, a watercraft propulsion system of a sixth preferred embodiment is the watercraft propulsion system of the first embodiment, wherein it additionally includes the battery for accumulating electric power to be supplied to the electric motor, the charge level detecting means for detecting the amount of electricity remaining in the battery, and a second determination means for determining in the first mode whether the electric motor should be driven by the electric power from the battery without restricting the output power of the electric motor, or the electric motor should be driven by the electric power from the battery restricting the output power of the electric motor based on the result from the detection by the charge level detecting means.

Further, a watercraft propulsion system of a seventh preferred embodiment is the watercraft propulsion system of the first embodiment, wherein it additionally includes a forward / reverse switching device provided between the source of driving force and the propeller for setting the rotational direction of the propeller to the positive rotation by which the watercraft propulsion system runs forward, or to the reverse rotation by which the watercraft propulsion system runs backward, as well as a control means for controlling the operation of the forward / reverse switch device according to the instruction given by the instruction means.

Further, a watercraft propulsion system of an eighth preferred embodiment is the watercraft propulsion system of the seventh embodiment, wherein it additionally includes the battery for accumulating electric power to be supplied to the electric motor, and the charge level detecting means for detecting the amount of electricity remaining in the battery, the propeller driving mode further includes the second mode in which the propeller is driven in reverse by the engine and an amount of output power from the engine is adjusted according to the instruction given by the instruction means, and the setting means sets the propeller driving mode to the first mode or to the second mode, taking account of comparison between the result from the detection by the charge level detecting means and a first threshold as well.

Further, a watercraft propulsion system of a ninth preferred embodiment is the watercraft propulsion system of the eighth embodiment, wherein the first determination means is included additionally for determining in the first mode if the electric power should be charged to the battery by means of the engine power generation based on comparison between the result from the detection by the charge level detecting means and a second threshold.

Further, a watercraft propulsion system of a tenth preferred embodiment is the watercraft propulsion system of the first embodiment, wherein a switching means for alternatively selecting to use or not to use the electric motor for driving the propeller is included additionally, the propeller driving mode further includes the second mode in which the propeller is driven in reverse by the engine, and the amount of output power from the engine is adjusted according to the instruction given by the instruction means, and the setting means sets the propeller driving mode to the first mode or to the second mode, taking account of the setting of the switching means as well.

An operating method for a watercraft propulsion system in an eleventh preferred embodiment is the operating method for the watercraft propulsion system including an engine and an electric motor as a source of driving force for a propeller, having: a first step in which an instruction is received regarding the types of operating mode as well as the amount of output power from the source of driving force; and a second step in which a setting is made for a propeller driving mode according to the instruction received in the first step; wherein in the second step, the propeller driving mode is set to the first mode when the reverse mode is instructed in the first step, in which mode the propeller is driven in reverse by the electric motor and the amount of output power from the electric motor is adjusted according to the instruction received in the first step.

According to the watercraft propulsion system in the first preferred embodiment, the instructions can be given simultaneously regarding the types of operating mode and the amount of output power from the source of driving force, thus, the engine and the electric motor serving as the source of driving force can be controlled easily, and the watercraft propulsion system can run backward by a simple operation. Also, the exhaust gas and the noise can be suppressed in backward running, because the propeller is driven in reverse by the electric motor when instruction is given to run in the reverse mode. The above description is also applicable to the operating method for the watercraft propulsion system in Claim 11.

According to the watercraft propulsion system in the second preferred embodiment, instructions for the types of operating mode and the amount of output power from the source of driving force can be given easily and continuously by the rotating operation of the control lever, resulting in a remarkable improvement of the controllability.

According to the watercraft propulsion system in the third preferred embodiment, in the first mode, the electric motor is driven by the electric power supplied by the battery when the battery charge level is sufficient, while on the other hand, the motor is driven by the electric power supplied by the battery, and in parallel, the electric power obtained by the engine power generation is charged into the battery when the battery charge level is relatively low. In this way, deterioration of the battery due to over discharge can be prevented.

According to the watercraft propulsion system in the fourth preferred embodiment, when the electric power is supplied by the engine power generation in the first mode, the engine speed can be controlled regardless of the rotational speed of the propeller, and the adequate amount of charging power can be obtained.

According to the watercraft propulsion system in the fifth preferred embodiment, the engine is operated at idle while the electric motor is driven by the electric power from the battery in the first mode, thus, swift transition to the second mode is assured afterward without re-starting the engine.

According to the watercraft propulsion system in the sixth preferred embodiment, the propeller can be driven without fail by adjusting the output power of the electric motor in response to the battery charge level in the first mode.

According to the watercraft propulsion system in the seventh preferred embodiment, the use of forward / reverse switching device allows the rotational direction of the propeller to be switched without changing the rotational direction of the electric motor, keeping the positive rotation of the electric motor.

According to the watercraft propulsion system in the eighth preferred embodiment, the propeller drive mode is set to the first mode or to the second mode, taking account of not only the operation mode, but also comparison between the result from the detection by the charge level detecting means and the first threshold. For instance, even if the operation mode is instructed to be the reverse mode, sometimes it is hard to drive the propeller by the electric motor using the first mode when the battery charge level is substantially low. In such cases, the second mode can be used to drive the propeller. It should be noted that when the propeller is driven in the second mode, namely driven by the engine, in the course of reverse mode, the positive rotation of the engine is maintained and the forward / reverse switching device is set to the reverse operation.

According to the watercraft propulsion system in the ninth preferred embodiment, in the first mode, the electric motor is driven by the electric power supplied by the battery when the battery charge level is sufficient, while on the other hand, the motor is driven by the electric power supplied by the battery, and in parallel, the electric power obtained by the engine power generation is charged into the battery when the battery charge level is relatively low. In this way, deterioration of the battery due to over discharge can be prevented.

According to the watercraft propulsion system in the tenth preferred embodiment, if the setting is made in advance to avoid the use of electric motor, the propeller can be driven in the second mode even when the operating mode is the reverse mode. Thus, a flexible response to the operator's demand can be implemented.

According to the effect of the present teaching, the engine and the electric motor can be controlled easily, and at the same time, the exhaust gas and the noise emission can be suppressed during the reverse operation.

The description above further discloses, in order to provide a watercraft propulsion system and its operating method by which an engine and an electric motor can be controlled easily, and at the same time the exhaust gas and the noise during a reverse operation can be suppressed, an embodiment of a watercraft propulsion system 10 which is provided with a control lever 46 for giving instructions regarding the types of operating mode as well as the amount of output power from the source of driving force, and a controller 42 for setting a propeller driving mode according to the instruction given by the control lever 46. When a reverse mode is instructed by the control lever 46, the controller 42 sets the propeller driving mode to a first mode in which a propeller 12 is rotated in reverse by means of an electric motor 16, and the amount of output power from the electric motor 16 is adjusted according to the instruction given by the control lever 46. The control lever 46 is rotatable, and can give instructions for the types of operating mode and the amount of output power from the source of driving force by means of its position.

According to a preferred first aspect, the description above discloses a watercraft propulsion system including an engine and an electric motor as a source of driving force for a propeller comprising: an instruction means for giving instructions regarding the types of operating mode as well as the amount of output power from the source of driving force; and a setting means for setting a propeller driving mode according to the instruction given by the instruction means; wherein the setting means sets the propeller driving mode to a first mode when a reverse mode is instructed by the instruction means, in which the propeller is driven in reverse by the electric motor, and the amount of output power from the electric motor is adjusted according to the instruction given by the instruction means.

Further, according to a preferred second aspect, the instruction means includes a control lever that is rotatable and able to give instructions regarding the types of operating mode and the amount of output power from the source of driving force by means of the lever position.

Further, according to a preferred third aspect, the watercraft propulsion system further comprises: a battery for accumulating electric power to be supplied to the electric motor; a charge level detecting means for detecting the amount of electricity remaining in the battery; and a first determination means for determining in the first mode whether the electric power should be charged to the battery by using the engine power generation or not based on the result from the detection by the charge level detecting means.

Further, according to a preferred fourth aspect, connection between the engine and the propeller is disengaged in the first mode.

Further, according to a preferred fifth aspect, the engine is operated at idle when the electric motor is driven by the electric power from the battery in the first mode.

Further, according to a preferred sixth aspect, the watercraft propulsion system further comprises a battery for accumulating electric power to be supplied to the electric motor; a charge level detecting means for detecting the amount of electricity remaining in the battery; and a second determination means for determining in the first mode whether the electric motor should be driven by the electric power from the battery without restricting the output power of the electric motor, or the electric motor should be driven by the electric power from the battery restricting the output power of the electric motor based on the result from the detection by the charge level detecting means.

Further, according to a preferred seventh aspect, the watercraft propulsion system further comprises: a forward / reverse switching device provided in between the source of driving force and the propeller for setting the rotational direction of the propeller to the positive rotation by which the watercraft propulsion system runs forward, or to the reverse rotation by which the watercraft propulsion system runs backward; and a control means for controlling the operation of the forward / reverse switch device according to the instruction given by the instruction means.

Further, according to a preferred eight aspect, the watercraft propulsion system further comprises a battery for accumulating electric power to be supplied to the electric motor; and a charge level detecting means for detecting the amount of electricity remaining in the battery, wherein the propeller driving mode further includes a second mode in which the propeller is driven in reverse by the engine and the amount of output power from the engine is adjusted according to the instruction given by the instruction means, and the setting means sets the propeller driving mode to the first mode or to the second mode, taking account of comparison between the result from the detection by the charge level detecting means and a first threshold as well.

Further, according to a preferred ninth aspect, the watercraft propulsion system further comprises the first determination means for determining in the first mode whether the electric power should be charged to the battery by means of the engine power generation based on comparison between the result from the detection by the charge level detecting means and a second threshold.

Further, according to a preferred tenth aspect, the watercraft propulsion system further comprises a switching means for alternatively selecting to use or not to use the electric motor for driving the propeller, wherein the propeller driving mode further includes the second mode in which the propeller is driven in reverse by the engine and the amount of output power from the engine is adjusted according to the instruction given by the instruction means, and the setting means sets the propeller driving mode to the first mode or to the second mode, taking account of the setting of the switching means as well.

The description further discloses, according to a preferred eleventh aspect, an operating method for a watercraft propulsion system including an engine and an electric motor as a source of driving force for a propeller, comprising: a first step in which an instruction is received regarding the types of operating mode as well as the amount of output power from the source of driving force; and a second step in which a setting is made for a propeller driving mode according to the instruction received in the first step; wherein in the second step, the propeller driving mode is set to the first mode when the reverse mode is instructed in the first step, in which the propeller is driven in reverse by the electric motor and the amount of output power from the electric motor is adjusted according to the instruction received in the first step.

## Claims

1. Watercraft propulsion system including an engine (14) and an electric motor (16) as a source of driving force for a propeller (12), and comprising an instruction means (46) configured for receiving instructions regarding the types of operating mode as well as the amount of output power from the source of driving force, and a setting means (42) configured for setting a propeller driving mode according to the instruction given by the instruction means (46), wherein the setting means (42) is adapted to set the propeller driving mode to a first driving mode when a reverse mode is instructed by the instruction means (46), and the setting means (42) is adapted to set the propeller driving mode to the first driving mode when the trolling mode is instructed by the instruction means (46), in the first driving mode the propeller (12) is driven by the electric motor (16), and wherein the amount of output power from the electric motor (16) is adjusted according to the instruction given by the instruction means (46), and wherein a forward/reverse switching device (56) is provided in between the source of driving force and the propeller (12) for setting the rotational direction of the propeller (12) to the positive rotation by which the watercraft propulsion system runs forward, or to the reverse rotation by which the watercraft propulsion system runs backward, and a control means (42) for controlling the operation of the forward/reverse switching device (56) according to the instruction given by the instruction means (46).

2. Watercraft propulsion system according to claim 1, wherein in the first driving mode the propeller (12) is driven solely by the electric motor (16).

3. Watercraft propulsion system according to claim 1 or 2, wherein the instruction means includes a single control lever (46) that is rotatable and able to receive instructions mutually regarding the types of operating mode and the amount of output power from the source of driving force by means of the lever position.

4. Watercraft propulsion system according to one of the claims 1 to 3, further comprising a battery (52) for accumulating electric power to be supplied to the electric motor (16), a charge level detecting means (54) for detecting the amount of electricity remaining in the battery (52), and a first determination means (42) for determining in the first mode whether the electric power should be charged to the battery (52) by using the engine power generation or not based on the result from the detection by the charge level detecting means (54).

5. Watercraft propulsion system according to claim 4, wherein connection between the engine (14) and the propeller (12) is disengaged in the first mode.

6. Watercraft propulsion system according to one of the claims 1 to 3, wherein the engine (14) is operated at idle when the electric motor (16) is driven by the electric power from the battery (52) in the first mode.

7. Watercraft propulsion system according to claim 6, further comprising a battery (52) for accumulating electric power to be supplied to the electric motor (16), a charge level detecting means (54) for detecting the amount of electricity remaining in the battery (52), and a second determination means (42) for determining in the first mode whether the electric motor (16) should be driven by the electric power from the battery (52) without restricting the output power of the electric motor (16), or the electric motor (16) should be driven by the electric power from the battery (52) restricting the output power of the electric motor (16) based on the result from the detection by the charge level detecting means (54).

8. Watercraft propulsion system according to one of the claims 1 to 7, comprising the battery (52) for accumulating electric power to be supplied to the electric motor (16), and the charge level detecting means (54) for detecting the amount of electricity remaining in the battery (52), wherein the propeller driving mode further includes a second mode in which the propeller (12) is driven in reverse by the engine (14) and the amount of output power from the engine (14) is adjusted according to the instruction given by the instruction means (46), and the setting means (42) is configured to set the propeller driving mode to the first mode or to the second mode, taking account of comparison between the result from the detection by the charge level detecting means (54) and a first threshold as well.

9. Watercraft propulsion system according to claim 8, further comprising the first determination means (42) for determining in the first mode whether the electric power should be charged to the battery (52) by means of the engine power generation based on comparison between the result from the detection by the charge level detecting means (54) and a second threshold.

10. Watercraft propulsion system according to one of the claims 1 to 9, further comprising a switching means (58) for alternatively selecting to use or not to use the electric motor (16) for driving the propeller (12), wherein the propeller driving mode further includes the second mode in which the propeller (12) is driven in reverse by the engine (14) and the amount of output power from the engine (14) is adjusted according to the instruction given by the instruction means (46), and the setting means (42) sets the propeller driving mode to the first mode or to the second mode, taking account of the setting of the switching means (58) as well.

11. A method for operating a watercraft propulsion system according to one of the claims 1-10, comprising a first step in which an instruction is received regarding the types of operating mode as well as the amount of output power from the source of driving force, and comprising a second step in which a setting is made for a propeller driving mode according to the instruction received in the first step, wherein in the second step, the propeller driving mode is set to the first mode when the reverse mode or the trolling mode is instructed in the first step, in which the propeller (12) is driven in reverse by the electric motor (16) and the amount of output power from the electric motor (16) is adjusted according to the instruction received in the first step.

## Patentansprüche

1. Wasserfahrzeug-Antriebssystem, das eine Maschine (14) und einen Elektromotor (16) als eine Quelle einer Antriebskraft für eine Schiffs-Schraube (12) beinhaltet, und eine Anweisungseinrichtung (46), die konfiguriert ist, um Anweisungen bezüglich des Typs von Betriebs-Modus sowie des Betrags der Abgabe-Leistung von der Quelle der Antriebskraft zu empfangen, und eine Setz-Einrichtung (42) umfasst, die konfiguriert ist, um einen Schiffs-Schrauben-Antriebs-Modus gemäß der Anweisung, gegeben durch die Anweisungseinrichtung (46), zu setzen, wobei die Setz-Einrichtung (42) angepasst ist, um den Schiffs-Schrauben-Antriebs-Modus auf einen ersten Antriebs-Modus zu setzen, wenn ein Umkehr-Modus durch die Anweisungseinrichtung (46) angewiesen ist, und die Setz-Einrichtung (42) angepasst ist, um den Schiffs-Schrauben-Antriebs-Modus auf den ersten Antriebs-Modus zu setzen, wenn der Trolling-Modus durch die Anweisungseinrichtung (46) angewiesen ist, in dem ersten Antriebs-Modus ist die Schiffs-Schraube (12) durch den Elektromotor (16) angetrieben, und wobei der Betrag der Abgabe-Leistung von dem Elektromotor (16) gemäß der Anweisung, gegeben durch die Anweisungsvorrichtung (46), eingestellt ist, und wobei eine Vorwärts/Rückwärts-Schaltvorrichtung (46) zwischen der Quelle der Antriebskraft und der Schiffs-Schraube (12) zum Setzen der Drehrichtung der Schiffs-Schraube (12) in die positive Drehung, in welcher das Wasserfahrzeug-Antriebssystem vorwärts läuft, oder in die Umkehr-Richtung, in welcher das Wasserfahrzeug-Antriebssystem rückwärts läuft, vorgesehen ist, und umfasst eine Steuereinrichtung (42) zur Steuerung des Betriebs der Vorwärts/Rückwärts-Schaltvorrichtung (46) gemäß der Anweisung, gegeben durch die Anweisungseinrichtung (46).

2. Wasserfahrzeug-Antriebssystem gemäß Anspruch 1, wobei in dem ersten Antriebs-Modus die Schiffs-Schraube (12) ausschließlich durch den Elektromotor (16) angetrieben ist.

3. Wasserfahrzeug-Antriebssystem gemäß Anspruch 1 oder 2, wobei die Anweisungseinrichtung einen einzelnen Steuerhebel (46) beinhaltet, der drehbar ist und in der Lage ist, Instruktionen wechselseitig bezüglich der Typen des Betriebs-Modus und des Betrags der Abgabe-Leistung von der Quelle der Antriebskraft durch die Hebel-Position zu empfangen.

4. Wasserfahrzeug-Antriebssystem gemäß einen der Ansprüche 1 bis 3, das weiterhin umfasst eine Batterie (52) zum Aufnehmen elektrischer Leistung, die zu dem Elektromotor (16) zuzuführen ist, eine Lade-Pegel-Erfassungseinrichtung (54) zum Erfassen des Betrags von Elektrizität, die in der Batterie (52) verblieben ist, und eine erste Bestimmungseinrichtung (42) zum Bestimmen, in dem ersten Modus, ob die elektrische Leistung in die Batterie (52) zu laden ist, unter Verwendung der Maschinen-Leistungs-Erzeugung, oder nicht, auf Grund des Ergebnisses der Erfassung der Lade-Pegel-Erfassungseinrichtung (54).

5. Wasserfahrzeug-Antriebssystem gemäß Anspruch 4, wobei Verbindung zwischen der Maschine (14) und der Schiffs-Schraube (12) in dem ersten Modus gelöst ist.

6. Wasserfahrzeug-Antriebssystem gemäß einem der Ansprüche 1 bis 3, wobei die Maschine (14) in Leerlauf betrieben ist, wenn der Elektromotor (16) durch elektrische Leistung von der Batterie (52) in dem ersten Modus angetrieben ist.

7. Wasserfahrzeug-Antriebssystem gemäß Anspruch 6, das weiterhin umfasst eine Batterie (52) zum Aufnehmen elektrischer Leistung, die zu dem Elektromotor (16) zuzuführen ist, eine Lade-Pegel-Erfassungseinrichtung (54) zum Erfassen des Betrags von Elektrizität, die in der Batterie (52) verblieben ist, und einer zweiten Bestimmungseinrichtung (42) zum Bestimmen in dem ersten Modus, ob der Elektromotor (16) durch die Elektroleistung von der Batterie (52) ohne Beschränkung der Abgabe-Leistung des Elektromotors (16) betrieben werden sollte, oder ob der Elektromotor (16) durch die Elektroleistung von der Batterie (52) mit Beschränkung der Abgabe-Leistung von dem Elektromotor (16) betrieben werden sollte, auf Grund des Ergebnisses von der Erfassung durch die Lade-Pegel-Erfassungseinrichtung (54).

8. Wasserfahrzeug-Antriebssystem gemäß einem der Ansprüche 1 bis 7, dass umfasst, die Batterie (52) zum Aufnehmen von Elektroleistung, die zu dem Elektromotor (16) zuzuführen ist, und die Lade-Pegel-Erfassungseinrichtung (54) zum Erfassen des Betrags von Elektrizität, die in der Batterie (52) verblieben ist, wobei der Schiffs-Schrauben-Antriebs-Modus weiterhin einen zweiten Modus beinhaltet, in welchem die Schiffs-Schraube (12) durch die Maschine (14) umgekehrt angetrieben ist, und der Betrag der Abgabe-Leistung von der Maschine (14) gemäß der Anweisung, gegeben durch die Anweisungseinrichtung (46), eingestellt ist, und die Setz-Einrichtung (42) konfiguriert ist, um den Schiffs-Schrauben-Antriebs-Modus auf den ersten Modus oder den zweiten Modus zu setzen, unter Berücksichtigung eines Vergleichs zwischen so wohl dem Ergebnis von der Erfassung durch die Lade-Pegel-Erfassungseinrichtung (54) und als auch einem ersten Grenzwert.

9. Wasserfahrzeug-Antriebssystem gemäß Anspruch 8, das weiterhin umfasst, die erste Bestimmungseinrichtung (42) zum Bestimmen in dem ersten Modus, ob die Elektroleistung in die Batterie (52) durch die Maschinen-Leistungs-Erzeugung geladen werden sollte, auf Grundalge eines Vergleichs zwischen dem Ergebnis von der Erfassung durch die Lade-Pegel-Erfassungseinrichtung (54) und einem zweiten Grenzwert.

10. Wasserfahrzeug-Antriebssystem gemäß einem der Ansprüche 1 bis 9, das weiter umfasst eine Schalteinrichtung (58) zur alternativen Auswahl der Verwendung oder Nicht-Verwendung des Elektromotors (16) zum Antrieb der Schiffs-Schraube (12), wobei der Schiffs-Schrauben-Antriebs-Modus weiterhin den zweiten Modus beinhaltet, in welchem die Schiffs-Schraube (12) durch die Maschine (14) umgekehrt angetrieben ist und der Betrag der Abgabe-Leistung von der Maschine (14) gemäß zu der Instruktion, gegeben durch die Instruktionseinrichtung (46), eingestellt ist, und die Setz-Einrichtung (42) setzt den Schiffs-Schrauben-Antriebs-Modus auf den ersten Modus oder den zweiten Modus, ebenfalls unter Berücksichtigung des Setzens der Schalteinrichtung (58).

11. Ein Verfahren zum Betrieb eines Wasserfahrzeug-Antriebssystems gemäß einem von den Ansprüchen 1 bis 10, umfassend einen ersten Schritt, in welchem eine Anweisung bezüglich des Typs des Betriebs-Modus sowie des Betrags der Abgabe-Leistung von der Quelle der Antriebskraft empfangen ist, und umfassend einen zweiten Schritt in welchem Setzen eines Schiffs-Schrauben-Antriebs-Modus gemäß der Anweisung, empfangen in dem ersten Schritt, durchgeführt ist, wobei in dem zweiten Schritt der Schiffs-Schrauben-Antriebs-Modus auf den ersten Modus gesetzt ist, wenn der Umkehr-Modus oder der Trolling-Modus in dem ersten Schritt angewiesen ist, in welchem die Schiffs-Schraube (12) durch den Elektromotor (16) umgekehrt angetrieben ist, und der Betrag der Abgabe-Leistung von dem Elektromotor (16) gemäß der Anweisung, empfangen in dem ersten Schritt, eingestellt ist.

## Revendications

1. Système de propulsion d'embarcation incluant un moteur thermique (14) et un moteur électrique (16) comme source de force d'entraînement pour une hélice (12), et comprenant un moyen d'instruction (46) configuré pour recevoir des instructions concernant les types de modes de fonctionnement ainsi que la quantité de puissance de sortie provenant de la source de force d'entraînement, et un moyen de réglage (42) configuré pour régler un mode d'entraînement d'hélice conformément à l'instruction donnée par le moyen d'instruction (46), dans lequel le moyen de réglage (42) est adapté pour régler le mode d'entraînement d'hélice à un premier mode d'entraînement quand une instruction de mode marche arrière est donnée par le moyen d'instruction (46), et le moyen de réglage (42) est adapté pour régler le mode d'entraînement d'hélice au premier mode d'entraînement quand une instruction de mode de traîne est donnée par le moyen d'instruction (46), dans lequel l'hélice (12) est entraînée par le moteur électrique (16) dans le premier mode d'entraînement, et dans lequel la quantité de puissance de sortie du moteur électrique (16) est réglée conformément à l'instruction donnée par le moyen d'instruction (46), et dans lequel un dispositif de commutation de marche avant/arrière (56) est pourvu entre la source de force d'entraînement et l'hélice (12) pour régler la direction de rotation de l'hélice (12) en rotation positive où le système de propulsion d'embarcation est en marche avant, ou en rotation inverse où le système de propulsion d'embarcation est en marche arrière, et un moyen de contrôle (42) pour contrôler le fonctionnement du dispositif de commutation de marche avant/arrière (56) conformément à l'instruction donnée par le moyen d'instruction (46).

2. Système de propulsion d'embarcation selon la revendication 1, dans lequel, dans le premier mode d'entraînement, l'hélice (12) est entraînée uniquement par le moteur électrique (16).

3. Système de propulsion d'embarcation selon la revendication 1 ou 2, dans lequel le moyen d'instruction comprend un levier de commande unique (46) qui est rotatif et capable de recevoir des instructions mutuelles concernant les types de modes de fonctionnement et la quantité de puissance de sortie provenant de la source de force d'entraînement à l'aide de la position du levier.

4. Système de propulsion d'embarcation selon l'une des revendications 1 à 3, comprenant en outre une batterie (52) pour accumuler la puissance électrique à fournir au moteur électrique (16), un moyen de détection de niveau de charge (54) pour détecter la quantité d'électricité restant dans la batterie (52), et un premier moyen de détermination (42) pour déterminer dans le premier mode si la puissance électrique doit ou non être chargée dans la batterie (52) en utilisant ou non la génération de puissance du moteur thermique sur base du résultat de la détection par le moyen de détection de niveau de charge (54).

5. Système de propulsion d'embarcation selon la revendication 4, dans lequel la connexion entre le moteur thermique (14) et l'hélice (12) est désembrayée dans le premier mode.

6. Système de propulsion d'embarcation selon l'une des revendications 1 à 3, dans lequel le moteur thermique (14) fonctionne au ralenti quand le moteur électrique (16) est entraîné par la puissance électrique de la batterie (52) dans le premier mode.

7. Système de propulsion d'embarcation selon la revendication 6, comprenant en outre une batterie (52) pour accumuler la puissance électrique à fournir au moteur électrique (16), un moyen de détection de niveau de charge (54) pour détecter la quantité d'électricité restant dans la batterie (52), et un deuxième moyen de détermination (42) pour déterminer dans le premier mode si le moteur électrique (16) doit être entraîné par la puissance électrique de la batterie (52) sans restreindre la puissance de sortie du moteur électrique (16), ou si le moteur électrique (16) doit être entraîné par la puissance électrique de la batterie (52) en restreignant la puissance de sortie du moteur électrique (16), sur base du résultat de la détection par le moyen de détection de niveau de charge (54).

8. Système de propulsion d'embarcation selon l'une des revendications 1 à 7, comprenant la batterie (52) pour accumuler la puissance électrique à fournir au moteur électrique (16), et le moyen de détection de niveau de charge (54) pour détecter la quantité d'électricité restant dans la batterie (52), dans lequel le mode d'entraînement d'hélice comprend en outre un deuxième mode dans lequel l'hélice (12) est entraînée en marche arrière par le moteur thermique (14) et la quantité de puissance de sortie du moteur thermique (14) est réglée conformément à l'instruction donnée par le moyen d'instruction (46), et le moyen de réglage (42) est configuré pour régler le mode d'entraînement d'hélice au premier mode ou au deuxième mode, en prenant en compte également une comparaison entre le résultat de la détection par le moyen de détection de niveau de charge (54) et un premier seuil.

9. Système de propulsion d'embarcation selon la revendication 8, comprenant en outre le premier moyen de détermination (42) pour déterminer dans le premier mode si la puissance électrique doit ou non être chargée dans la batterie (52) à l'aide de la génération de puissance du moteur thermique sur base d'une comparaison entre le résultat de la détection par le moyen de détection de niveau de charge (54) et un deuxième seuil.

10. Système de propulsion d'embarcation selon l'une des revendications 1 à 9, comprenant en outre un moyen de commutation (58) pour sélectionner alternativement l'utilisation ou non du moteur électrique (16) pour entraîner l'hélice (12), dans lequel le mode d'entraînement d'hélice comprend en outre le deuxième mode dans lequel l'hélice (12) est entraînée en marche arrière par le moteur thermique (14) et la quantité de puissance de sortie du moteur thermique (14) est réglée conformément à l'instruction donnée par le moyen d'instruction (46), et le moyen de réglage (42) règle le mode d'entraînement d'hélice dans le premier mode ou dans le deuxième mode, en prenant également en compte le réglage du moyen de commutation (58).

11. Procédé de fonctionnement d'un système de propulsion d'embarcation selon l'une des revendications 1 à 10, comprenant une première étape dans laquelle une instruction est reçue concernant les types de modes de fonctionnement ainsi que la quantité de puissance de sortie provenant de la source de force d'entraînement, et comprenant une deuxième étape dans laquelle un réglage est effectué pour un mode d'entraînement d'hélice conformément à l'instruction reçue à la première étape, dans lequel, à la deuxième étape, le mode d'entraînement d'hélice est réglé dans le premier mode quand une instruction de mode marche arrière ou de mode de traîne est donnée à la première étape, où l'hélice (12) est entraînée en marche arrière par le moteur électrique (16) et la quantité de puissance de sortie du moteur électrique (16) est réglée conformément à l'instruction reçue à la première étape.
